## Europäisches Patentamt
## European Patent Office
## Office européen des brevets

(11) Publication number: **0 169 798**
**B1**

(12) **EUROPEAN PATENT SPECIFICATION**

(45) Date of publication of patent specification: **23.11.88**

(51) Int. Cl.⁴: **F 01 D 11/00, F 01 D 5/06**

(21) Application number: **85630107.2**

(22) Date of filing: **11.07.85**

(54) Rotating seal for gas turbine engine.

(30) Priority: **23.07.84 US 633723**

(43) Date of publication of application:
**29.01.86 Bulletin 86/05**

(45) Publication of the grant of the patent:
**23.11.88 Bulletin 88/47**

(84) Designated Contracting States:
**DE FR GB**

(56) References cited:
**FR-A-2 533 620**
**GB-A- 790 029**
**US-A-3 047 268**
**US-A-3 094 309**
**US-A-3 733 146**
**US-A-4 127 359**

**PATENTS ABSTRACTS OF JAPAN, vol. 7, no. 197 (M-239) 1342r, 27th August 1983; & JP - A - 58 96 105 (HITACHI SEISAKUSHO K.K.) 08-06-1983**

(73) Proprietor: **UNITED TECHNOLOGIES CORPORATION**
**United Technologies Building 1, Financial Plaza Hartford, CT 06101 (US)**

(72) Inventor: **Peters, Gary Paul**
**3496 Lynnwood Drive Apartment 4**
**Lake Worth Florida 33461 (US)**

(74) Representative: **Weydert, Robert et al**
**OFFICE DENNEMEYER S.à.r.l. P.O. Box 1502**
**L-1015 Luxembourg (LU)**

EP 0 169 798 B1

Courier Press, Leamington Spa, England.

## Description

This invention relates to a turbine rotor according to the precharacterizing portion of claim 1 and constitutes an improvement over the lenticular seal disclosed in US—A—3,733,146 which discloses a toroidally shaped seal disposed between the 1st and 2nd turbine and being lenticular in cross section. Essentially, the inner and outer curved seal plates form an elliptical body that has its narrow ends abut against the adjacent disks of the turbines or the side plates thereof. This, in fact, forms a point attachment in cross section, and a circumferential edge attachment in full, being supported radially by the turbine disks and transmitting the axial load through both curved plates. In operation, the plates achieved their results, that is, net reduced stress, by virtue of the bending of the plates. Obviously, the higher the bending loads the heavier the plates have to be so as to tolerate the higher bending stresses. Other patents that disclose seals or spacers between turbine disks are US—A—3,094,309 and 3,894,324.

Reference is also made to US—A—4,127,359 which discloses a turbine rotor according to the precharacterizing portion of claim 1. The known seal or spacer between the two turbine rotor disks is I-beam shaped in cross-section. The inner rim of the I-beam section is a heavy member which radially and axially abuts the turbine disks to transmit radial and axial forces at that location. The outer rim is aligned with the blade platforms leaving circumferential gaps therebetween.

In GB—A—790 029 a built up rotor for an axial flow rotary machine is disclosed having an I-beam shaped member which does not merely act as a seal or spacer but serves as the main structural connecting member for the turbine disks. It is therefore a heavily dimensioned member to transmit all of the turbine loads. A threaded connection between the inner rim of the connecting member transmits substantially all of the loads. An outer rim axially abuts the turbine disks to impart rigidity to the built-up structure.

The object of the invention is to provide a turbine rotor having an improved seal between the turbine rotor disks which achieves the sealing capabilities of the known seals but which is of lighter weight structure and alleviates the full radial loads on the disks.

This object is achieved by the features claimed in the characterizing portion of claim 1.

The outer rim is concentric to the centerline and transmits the axial loads. Because of this configuration the outer rim provides a stiffer backbone to the axial stresses exerted by the turbine disks and serves to tune the vibrations of the 2nd turbine. The inner rim is unrestrained in axial direction between the turbine disks and radially abuts against projections extending axially from the adjacent turbine disks and may be slightly conical in shape convexing toward the centerline. The inner rim transmits the radial load and it, itself, takes some of the radial load by transmitting some of the load to the outer rim through the transverse member, thus minimizing the radial stress placed on the turbine disks. Transmitting the axial load at the outer rim and the radial load at the inner rim permits a reduction of the overall weight of the seal thereby further reducing the radial stress on the turbine disks. Lugs on the inner rim cooperate with lugs on the turbine disks to prevent rotation of the seal in the event of slippage. The lugs of the inner rim cooperate with the disk of the second stage turbine to assure that the presssure drop across the transverse member doesn't exceed a predetermined value. Further, the seal may include a vertical projection member (hammer head) adjacent the rear side plate of the first turbine to exert a load upon rotation to retain it in place.

The seal member may also serve to secure components of this turbine assembly. Provisions may be made to admit pressure behind the I section of the I-beam to balance the pressure acting on the opposite face.

Other advantageous features of the turbine engine power plant are characterized in the dependent claims.

The gas turbine engine power plant will now be described with reference to the drawings, wherein:

Figure 1 is a partial view partly in section and partly in elevation showing the 1st and 2nd turbine stages of a gas turbine engine employing the invention, and

Figure 2 is a partial view in elevation taken along line 2—2 of Figure 1 showing the inner face of the 2nd turbine stage.

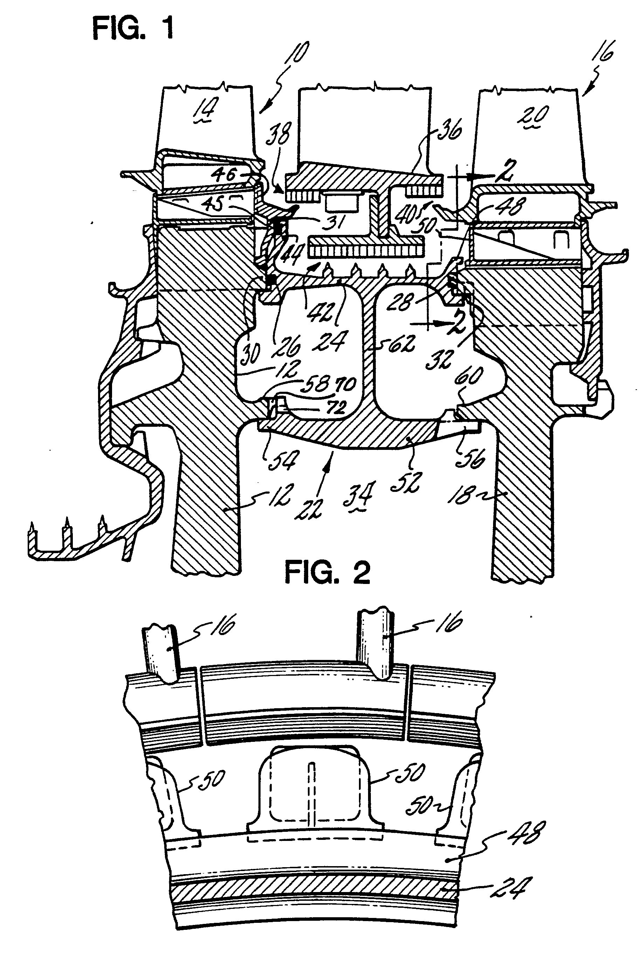

This invention is particularly suitable as the inner cavity seal for the 1st and 2nd turbine stages of a gas turbine power plant such as the engine models JT-9D and PW2037 manufactured by Pratt & Whitney Aircraft of United Technologies Corporation, the assignee of this patent application, the details of which are incorporated herein by reference. As best seen from Figures 1 & 2, the first stage turbine generally illustrated by reference numeral 10 comprises a rotor disk 12 and a plurality of circumferentially spaced turbine blades 14 (only a portion being shown) suitably supported thereby. Likewise, the 2nd stage turbine generally illustrated by reference numeral 16 comprises a rotor disk 18 and a plurality of circumferentially spaced blades 20 (only a portion being shown) suitably supported thereby. Although not shown, it will be appreciated that both the 1st and 2nd stage turbines are coupled to a common shaft (not shown) and serve to extract energy from the engine's fluid working medium and transfer said energy in terms of R.P.M. to the engine's shaft.

As noted, the I-Beam (in cross section) seal generally indicated by reference numeral 22 comprises an outer rim 24 spanning between the rear of the disk 12 and the front of disk 18 and is configured so that the general shape is generally concentric to the engine's centerline. Annular O-type seals 26 and 28 bear against the axial projections 30, 31, and 32 respectfully to minimize leakage from the gas path that is outboard of the seal in the vicinity of the blades 14 and 20. The outer rim 24 abuts the disks 12, 18 radially inwardly of rotor blade receiving recesses formed in the disk 12, 18. Knife edge seals are provided on the outer rim 24 cooperating with sealing means at the inner ends of stator vanes 36 disposed between the turbine blades 14, 20.

From the foregoing it is apparent that the rim 24 together with "O" seals 30 and 32 serve to seal the cavity 34 from the engines working fluid medium. Leakage around the blades adjacent the stator vanes 36 is minimized by the labyrinth seals 38, 40 and 42. Similar to the lenticular seal in US—A—3,733,146 the knife edges bear against the complimentary lands formed from honeycomb material when in the rotating mode and serve the same sealing function. Labyrinth seals are well known and are not a part of this invention.

A hammer head 44, which extends radially from the outer edge of rim 24 around the circumference bears against the rear side plate 46 of the turbine rotor 12. The rim 24 is tightly fitted between turbine disks 12 and 18 and in addition to the other features to be elaborated on hereinbelow together with the hammer head 44 secures several of the component parts of the turbine stages. The hammer head 44 extends radially outwardly from the forward edge of the outer rim 24 and is axially off set from that edge toward the rearward edge thereof. The hammer head 44 bears against the rear side plate 46 which is annular in shape and is held into place thereby. For additional sealing "O" seals 45 may be used in hammer head 44. Because of the axial off set of the hammer head 44, the centrifugal loads upon rotation drive the hammer head 44 axially forwardly (as viewed by the direction of the engine's working medium) forcing it against the side plate 46 when the first stage turbine is fully loaded. Likewise a rearward projection 48 abuts against individual cover plates 50 that are relatively loosely mounted in the gap between the turbine disk 18 and the root of the turbine blade 20. The cover plates per se are well known in gas turbine engines but its retention as described herein is significantly different from heretofore designs. Heretofore side plates and cover plates were held into place by other means, such as rivets, welds and the like. This invention avoids the use of such means so as to reduce the total number of engine components.

As noted above, the outer rim 24 not only serves to support the knife edges of the labyrinth seal it provides axial stiffness to the 2nd stage turbine so as to tune it for the vibrating field to which it is subjected.

The inner rim 52 is slightly coned to form a convexed surface, the outer edges 54 and 56 have smooth radially outwardly facing cylindrical surfaces which underlie and radially abut smooth radially inwardly facing cylindrical surfaces provided on axial projections 58 and 60 of the rotor disks 14 and 20. The outer edges 54, 60 are snapped into place on the projections 58 and 60 upon assembly. A flat plate or disk 62 support the inner rim and outer rim and in cross section resemble an "I" Beam. The rim 52 serves to take up the radial loads passing some of the radial stresses through the disks via the axial projections 58 and 60 and some through the flat plate 62. The flat plate 62 by virtue of this construction serves to minimize or control the growth of the knife edges on the outer rim (24).

The radial restraints 54 and 56 also serve to control the average tangential stress in the seal 22 for preventing it to burst or disintegrate and to control local tangential stress for low cycle fatigue considerations.

The dimensions between the axial projection 60 on turbine disk 18 and the restraint 56 is selected to allow a leakage path from cavity 34 into the cavity between flat plate 62 and turbine disk 18 so as to balance the pressure across the flat plate 62. Obviously, because the cavity between plate 62 and the first turbine is in proximity to the first turbine where the pressure is highest, it tends to see a higher pressure than that which is on the opposing side. The gap provided adjacent restraint 56 tends to bleed pressure therein so as to balance these forces. While not preferred, this pressure differential could be alleviated further by locating holes within flat plate 62 itself.

Antirotation lugs 70 formed on disk 12 and 72 formed on rim 52 cooperate to prevent relative rotation to the turbine disks and seal in the event of a malfunction. The lenticular seal described in US—A—4,332,133 contained a similar function.

Reference is made to EP—A1—169801 which describes a similar gas turbine engine power plant.

## Claims

1. A turbine rotor for a gas turbine power plant, having a first disk (12) supporting a plurality of turbine blades (14) and having a first axial projection (58), a second disk (18) supporting a plurality of turbine blades (20) and having a second axial projection (60), rotating sealing means (22) for a cavity (34) defined between said first disk and said second disk sealing against the working fluid of said turbine, said sealing means (22) including an annular member (22) I-beam shaped in cross-section and having an outer flat contoured rim (24), an inner convexed, contoured rim (52) extending between said first disk (12) and said second disk (18), and a web (62) interconnecting the outer rim (24) and the inner rim (52), said annular member (22) having on the inner rim (52) radially outwardly facing surfaces radially abutting radially inwardly facing surfaces of first and second axial projections (58, 60), respectively, of the first and second disks (12, 18) for transmitting the radial loads whereby a portion of the radial load is transmitted through said first disk (12) and said second disk (18) and the remaining portion is transmitted through the I-beam shaped annular member (22), and the annular member (22) having axially facing surfaces for axial abutment with axially facing surfaces on the first and second disks (12, 18) to transmit the axial loads imposed by said turbine blades, characterized in that the inner rim (52) of said annular member (22) is unrestrained in axial direction between the first and second disks (12, 18) and the axially facing surfaces are on the outer rim (24) which axially abuts said first and second disks (12, 18).

2. A turbine rotor according to claim 1, characterized in that said first disk (12) at the juncture supporting said turbine blades (14) includes recesses, an annular side plate (46) abutting the face of said first disk (12) at said recesses, a hammer head (44) projecting radially outward from one edge of said outer flat contoured rim (24) but being slightly axially offset from said one edge toward the other edge of said outer rim (24), said hammer head (44) axially abutting said side plate (46) to retain said side plate (46) in position and the axial offset causing said hammer head (44) to exert a load on said side plate (46) when said rotating sealing means (22) is in the rotating mode.

3. A turbine rotor according to claim 1 or 2, characterized in that the outer edge (56) of said inner convexed, contoured rim (52) includes a space between said second axial projection (60) and said edge (56) to permit fluid in said cavity (34) to pressurize the side face of said I-section (62).

4. A turbine rotor according to anyone of claims 1 to 3, characterized by including ring seal elements (26, 28) in annular grooves formed in opposing side surfaces of said outer flat contoured rim (24) bearing against the opposite side faces of the respective first disk and second disk (12, 18).

5. A turbine rotor according to anyone of claims 1 to 4, characterized in that both disks (12, 18) have blade receiving recesses, and the outer rim (24) abuts the disks (12, 18) radially inwardly of said recesses, the outer rim (24) and the inner ends of stator vanes (36) disposed between the blades (14, 20) having means thereon forming a labyrinth seal (42) therebetween.

**Patentansprüche**

1. Turbinenrotor für ein Gasturbinentriebwerk, mit einer ersten Scheibe (12), die mehrere Turbinenlaufschaufeln (14) trägt und einen ersten axialen Vorsprung (58) hat, mit einer zweiten Scheibe (18), die mehrere Turbinenlaufschaufeln (20) trägt und einen zweiten axialen Vorsprung (60) hat, mit einer umlaufenden Dichteinrichtung (22) für einen Hohlraum (34), der zwischen der erstne Scheibe und der zweiten Scheibe gebildet ist, zum Abdichten gegen das Arbeitsfluid der Turbine, wobei die Dichteinrichtung (22) ein ringförmiges Teil (22) aufweist, das im Querschnitt I-förmig ist und einen äußeren, ebenen, profilierten Kranz (24) hat, einen inneren, konvex gekrümmten, profilierten Kranz (52), der sich zwischen der ersten Scheibe (12) und der zweiten Scheibe (18) erstreckt, und einen Steg (62), der den äußeren Kranz (24) und den inneren Kranz (52) miteinander verbindet, wobei das ringförmige Teil (22) an dem inneren Kranz (52) radial nach außen gerichtete Flächen hat, die an radial nach innen gerichteten Flächen des ersten und des zweiten axialen Vorsprungs (58 bzw. 60) der ersten und der zweiten Scheibe (12, 18) radial anstoßen, um die radialen Belastungen zu übertragen, wodurch ein Teil der radialen Belastung über die erste Scheibe (12) und die zweite Scheibe (18) übertragen wird und der übrige Teil über das im Querschnitt I-förmige ringförmige Teil (22) übertragen wird, und wobei das ringförmige Teil (22) axial gerichtete Flächen zur axialen Anlage an axial gerichteten Flächen an der ersten und der zweiten Scheibe (12, 18) zum Übertragen der axialen Belastungen hat, die durch die Turbinenlaufschaufeln ausgeübt werden, dadurch gekennzeichnet, daß der innere Kranz (52) des ringförmigen Teils (22) zwischen der ersten und der zweiten Scheibe (12, 18) in axialer Richtung nicht eingespannt ist und daß die axial gerichteten Flächen an dem äußeren Kranz (24) vorgesehen sind, der an die erste und die zweite Scheibe (12, 18) axial anstößt.

2. Turbinenrotor nach Anspruch 1, dadurch gekennzeichnet, daß die erste Scheibe (12) an der Verbindungsstelle, die die Turbinenlaufschaufeln (14) trägt, Aussparungen aufweist, eine ringförmige Seitenplatte (46), die an die Stirnseite der ersten Scheibe (12) an den Aussparungen anstößt, einen Hammerkopf (44), der von einem Rand des äußeren, ebenen, profilierten Kranzes (24) radial nach außen vorsteht, aber gegenüber dem einen Rand zu dem anderen Rand des äußeren Kranzes (24) hin etwas axial versetzt ist, wobei der Hammerkopf (44) an die Seitenplatte (46) axial anstößt, um die Seitenplatte (46) in Position zu halten, und wobei die axiale Versetzung bewirkt, daß der Hammerkopf (44) eine Belastung auf die Seitenplatte (46) ausübt, wenn die umlaufende Dichteinrichtung (22) im Betrieb umläuft.

3. Turbinenrotor nach Anspruch 1 oder 2, dadurch gekennzeichnet, daß der äußere Rand (56) des inneren, konvex gekrümmten, profilierten Kranzes (52) einen Zwischenraum zwischen dem zweiten axialen Vorsprung (60) und dem Rand (56) aufweist, der Fluid in dem Haulraum (34) gestattet, die Seitenfläche des I-Querschnitts (62) mit Druck zu beaufschlagen.

4. Turbinenrotor nach einem der Ansprüche 1 bis 3, gekennzeichnet durch Ringdichtelemente (26, 28) in ringförmigen Nuten, die in entgegengesetzten Seitenflächen des äußeren, ebenen, profilierten Kranzes (24) gebildet sind, welche an den gegenüberliegenden Seitenflächen der ersten bzw. zweiten Scheibe (12, 18) tragen.

5. Turbinenrotor nach einem der Ansprüche 1 bis 4, dadurch gekennzeichnet, daß beide Scheiben (12, 18) Schaufelaufnahmeaussparungen haben und das der äußere Kranz (24) an den Scheiben (12, 18) radial einwärts der Aussparungen anliegt, und daß der äußere Kranz (24) und die inneren Enden von Statorleitschaufeln (36), die zwischen den Laufschaufeln (14, 20) angeordnet sind, mit Einrichtungen versehen sind, welche zwischen denselben eine Labyrinthdictung (42) bilden.

## Revendications

1. Rotor de turbine pour groupe moto-propulseur à turbine à gaz, du type comprenant un premier disque (12) supportant plusieurs aubes de turbine (14) et ayant une première saillie axiale (58), un second disque (18) supportant plusieurs aubes de turbine (20) et ayant une second saillie axiale (60), un dispositif rotatif d'étanchéité (22) pour isoler une cavité (34) formée entre le premier disque et le second disque par rapport au fluide de travail de la turbine, ledit dispositif d'étanchéité (22) comprenant un organe annulaire à section transversale en I constitué par une couronne ou jante externe plate ou cylindrique (24), une couronne interne convexe et profilée (52) disposée entre le premier disque (12) et le second disque (18), et une âme (62) reliant entre elles ces couronnes externe et interne, cet organe annulaire (22) présentant sur sa couronne interne (52) des surfaces orientées radialement vers l'extérieur qui e viennent buter radialement et respectivement contre des surfaces en regard, orientées vers l'intérieur, desdites première et seconde saillies axiales (58, 60) des premier et second·disques (12, 18), afin de transmettre les charges radiales de façon qu'une fraction de ces charges radiales soit transmise à travers le premier disque (12) et le second disque (18) et que la fraction restante soit transmise à travers l'organe à section en I (22), cet organe à section en I présentant des surfaces axialement en regard qui peuvent buter contre des surfaces axialement en regard des premier et second disques (12, 18) afin de transmettre les charges axiales provenant des aubes de la turbine, caractérisé en ce que la couronne interne (52) de l'organe annulaire (22) n'est pas bloquée dans le sens axial entre les premier et second disques (12, 18) et que lesdites surfaces axialement en regard se trouvent sur la couronne externe (24) qui vient buter axialement contre lesdites premier et second disques (12, 14).

2. Rotor de turbine selon la Revendication 1, caractérisé en ce que le premier disque (12) comprend, à la jonction qui supporte lesdites aubes (14) de la turbine, des cavités, une plaque latérale annulaire (46) qui vient buter contre la face du premier disque (12) à l'endroit de ces cavités, une tête en forme de marteau (44) qui fait saillie radialement vers l'extérieur sur un bord de la couronne externe plate (24) mais qui est légèrement décalée dans le sens axial par rapport à ce bord vers l'autre bord de la couronne externe (24), ladite tête en forme de marteau (44) vernant buter axialement contre ladite plaque latérale (46) afin de maintenir en place ladite plaque (46), ledit décalage axial ayant pour effet de faire exercer par la tête en forme de marteau (44) une pression sur ladite plaque latérale (46) lorsque le dispositif rotatif d'étanchéité (22) est en rotation.

3. Rotor de turbine selon l'une quelconque des Revendications 1 ou 2, caractérisé en ce que le bord extérieur (56) de la couronne interne convexe et profilée (52) présente un intervalle situé entre la seconde saillie axiale (60) et ledit bord (56) afin de permettre au fluide de travail présent dans ladite cavité (34) d'exercer une pression sur la face latérale de ladite section en I (62).

4. Rotor de turbine selon l'une quelconque des Revendications 1 à 3, caractérisé en ce qu'il comprend des joints toriques (26, 28) disposés dans des gorges annulaires formées dans les surfaces latérales opposées de la couronne externe plate (24) qui portent contre les faces latérales opposées respectivement du premier disque (12) et du second disque (18).

5. Rotor de turbine selon l'une quelconque des Revendications 1 à 4, caractérisé en ce que les deux disques (12, 18) présentant des cavités destinées à recevoir le pied des aubes et que la couronne externe (24) vient buter contre les disques (12, 18) radialement vers l'intérieur desdites cavités, la couronne externe (24) et les extrémités internes des aubes statoriques disposées entre les aubes de rotor (14, 20) étant pourvues d'éléments formant un labyrinthe d'étanchéité (42) entre elles.

FIG. 1

FIG. 2